Europäisches Patentamt

European Patent Office

Office européen des brevets

(19)

(11) Veröffentlichungsnummer: **0 144 733**
**B1**

(12) **EUROPÄISCHE PATENTSCHRIFT**

(45) Veröffentlichungstag der Patentschrift:
27.04.88

(51) Int. Cl.⁴: **F 16 C 29/02,** F 16 C 32/06,
G 01 B 21/04

(21) Anmeldenummer: **84113199.8**

(22) Anmeldetag: **02.11.84**

(54) **Befestigungsschaft für den Lagerkörper eines Luftlagers.**

(30) Priorität: **09.11.83 CH 6046/83**

(43) Veröffentlichungstag der Anmeldung:
**19.06.85 Patentblatt 85/25**

(45) Bekanntmachung des Hinweises auf die Patenterteilung:
**27.04.88 Patentblatt 88/17**

(84) Benannte Vertragsstaaten:
**DE FR GB IT SE**

(56) Entgegenhaltungen:
**EP-A-0 071 469
EP-A-0 121 829
DE-A-2 526 062
DE-C-327 999
FR-A-2 305 108
US-A-3 419 928**

(73) Patentinhaber: **Wyler AG Wasserwaagen und
Messwerkzeuge, Im Hölderli, CH- 8405 Winterthur
(CH)**

(72) Erfinder: **Stauber, Siegfried T., Hüttenkopfstrasse
32, CH- 8051 Zürich (CH)**

(74) Vertreter: **Quehl, Horst M., Dipl.- Ing., Seestrasse
640 Postfach 90, CH- 8706 Meilen/Zürich (CH)**

## Beschreibung

Die Erfindung betrifft einen Befestigungsschaft für den Lagerkörper eines Luftlagers mit einem Aussengewinde für den Eingriff in ein Aufnahmeloch eines zu lagernden Trägerkörpers und einem für den Eingriff in ein Sackloch des Lagerkörpers bestimmten Abstützende.

Bei der Verwendung von Luftlagern für Präzisionsgeräte, wie z. B. für die Schlittenführungen der Meßschlitten von Koordinatenmessmaschinen ist es für eine hohe Genauigkeit der Lagerung erforderlich, dass sich der Lagerkörper sehr genau relativ zu dem zu lagernden Trägerkörper, z. B. dem Meßschlitten einstellen und fixieren lässt. Bisher erfolgte die Fixierung mit Hilfe einer auf den Befestigungsschaft des Lagerkörpers aufgeschraubten Kontermutter. Beim Festziehen der Kontermutter konnte jedoch durch das beim Gewindeeingriff zwischen dem Befestigungsschaft und dem Gewindeloch des Trägerkörpers vorhandene Spiel eine unerwünschte Verstellung der eingestellten Position auftreten und das Einstellen, bzw. Justieren des Befestigungsschaftes und damit des Lagerkörpers war somit verhältnismässig aufwendig.

Der Erfindung liegt die Aufgabe zugrunde, einen Befestigungsschaft zu finden, der sich auf einfache und schnelle Weise genau einstellen lässt und dessen Fixierung zu keiner Änderung der Einstellposition führt. Die Lösung dieser Aufgabe erfolgt aufgrund der Merkmale des Patentanspruchs 1. Vorteilhafte Ausgestaltungen des Befestigungsschaftes sind Gegenstand der abhängigen Patentansprüche.

Im folgenden wird die Erfindung anhand eines in der Zeichnung dargestellten Ausführungsbeispieles näher erläutert. Es zeigt:

Fig. 1 eine Seitenansicht eines Fefestigungsschaftes und eines Lagerkörpers in den dieser eingesetzt ist,

Fig. 2 einen Querschnitt durch einen Lagerkörper, und

Fig. 3 einen Querschnitt durch den Befestigungsschaft nach Fig. 1 in vergrösserter Darstellung.

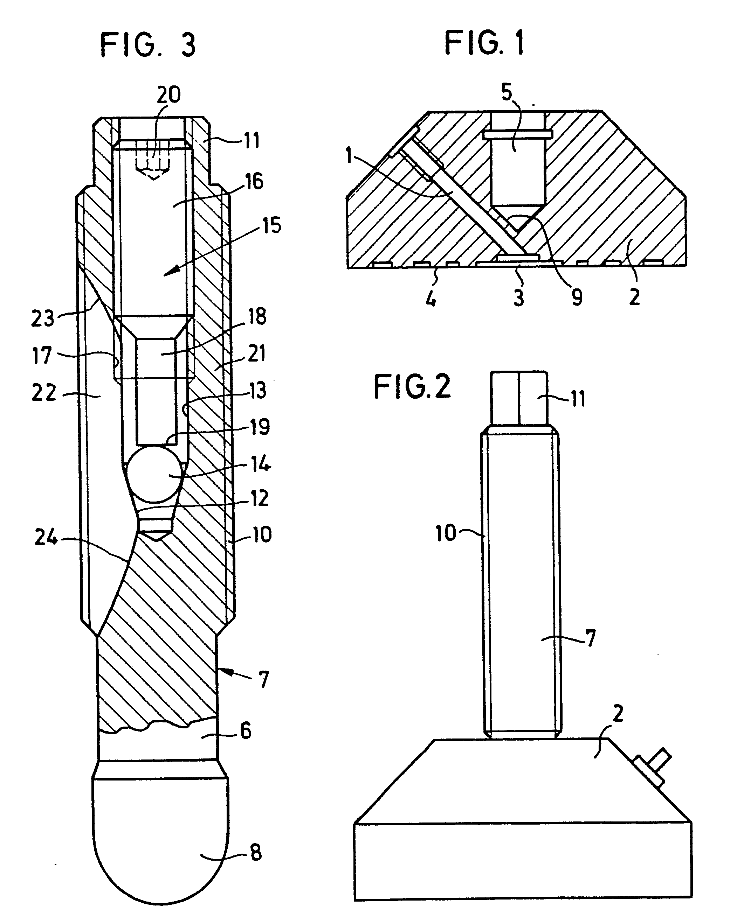

Der in Fig. 1 dargestellte Lagerkörper ist in einer früheren Anmeldung des gleichen Anmelders EP-A-121 829 näher beschrieben. Über einen Luftzuführkanal 1 des Lagerkörpers 2 wird Druckluft einer zentralen Öffnung 3 in der Lagerfläche 4 des Lagerkörpers zugeführt, von der aus sie sich über die Lagerfläche verteilt und zwischen der Lagerfläche 4 und einer nichtdargestellten Gegenfläche einen Luftspalt bildet. Ein zentrales Sackloch 5 des Lagerkörpers dient der Aufnahme des zapfenförmigen Abstützendes 6 des Befestigungsschaftes 7.

Fig. 2 zeigt den Befestigungsschaft 7 nach Herstellung der Verbindung mit dem Lagerkörper 2. Das Abstützende 6 hat einen halbkugelförmigen Abstützkopf 8, der an der kegelfdörmigen Endfläche 9 des Sackloches 5 des Lagerkörpers 2 anliegt, so dass der Lagerkörper durch den Anlagedruck relativ zu dem Befestigungsschaft zentriert wird. Der Öffnungswinkel der kegelförmigen Fläche 9 beträgt 90°.

Mit seinem Aussengewinde 10 ist der Befestigungsschaft 7 in ein nicht dargestelltes durchgehendes Aufnahmeloch eines durch das Luftlager zu lagernden Trägerkörpers eingeschraubt, wofür das äussere Ende des Befestigungs schaftes einen z. B. aus einem Sechskant bestehenden Betätigungskopf 11 aufweist. Dieser kann beispielsweise mittels eines Steckschlüssels betätigt werden. Da sich das Abstützende 6 mit dem Abstützkopf 8 in dem Sackloch 5 drehen kann, bewirkt das Verdrehen des Befestigungsschaftes im Gewinde des Aufnahmeloches nicht auch ein Verdrehen des Lagerkörpers 2.

Bei der Herstellung des Befestigungschaftes 7 kann dessen Aussengewinde so hergestellt werden, dass sich der Befestigungsschaft leicht in dem Aufnahmeloch des Trägerkörpers verdrehen lässt, so dass eine schnelle Grobeinstellung möglich ist. Sobald der Befestigungsschaft jedoch angenähert die gewünschte Einstellposition erhalten hat, wird der Befestigungsschaft im Bereich des konischen Teiles 12 einer sich entlang der Achse des Befestigungsschaftes erstreckenden Schaftbohrung 13 aufgeweitet, so dass sich in diesem Bereich die Gewindegänge des Schaftaussengewindes 10 spielfrei an diejenigen des Aufnahmeloches in dem zu lagernden Trägerkörper anlegen. Die Beseitigung des Gewindespiels ermöglicht dann eine sehr genaue Feinjustierung der Position des Befestigungsschaftes und damit des Lagerkörpers relativ zu dem Trägerkörper. Nach Erreichen der gewünschten Einstellposition wird der Befestigungsschaft durch weiteres Aufweiten im Bereich des konischen Bohrungsteiles 12 im Aufnahmeloch verklemmt, so dass die Einstellposition gesichert ist.

Die Aufweitung des Befestigungsschaftes erfolgt mittels eines an der Wand des konischen Bohrungsteiles 12 anliegenden Klemmkörpers 14, der mittels eines Andrückbolzens 15 in den konischen Bohrungsteil 12 hineingedrückt wird. Der Konuswinkel beträgt beispielsweise 18° gegenüber der Achse des Befestigungsschaftes.

Der Klemmkörper 14 liegt mit einer Kugelfläche an dem konischen Bohrungsteil 12 an und besteht beispielsweise aus einer Stahlkugel, oder er bildet einen abgerundeten Teil des Andrückbolzens. Der Andrückbolzen 15 hat einen Schaftteil 16 mit einem Aussengewinde, dass in ein Innengewinde 17 der Schaftbohrung 13 eingreift, das sich über einen Teil der Länge der Schaftbohrung erstreckt. Anschliessend an den das Aussengewinde aufweisenden Schaftteil 16 hat der Andrückbolzen 15 einen im Durchmesser kleineren Andrückschaft 18, dessen freies Ende 19 an dem kugelförmigen Klemmkörper 14 anliegt. Wird der Andrückbolzen 15 mittels eines in einen Innensechskant 20 des Andrückbolzens eingreifenden Werkzeuges relativ zu dem Befestigungsschaft 7 einwärts verdreht, so drückt der Andrückbolzen 15 im Klemmkörper 14 in den konischen Bohrungsteil 12 hinein und weitet somit den Befestigungsschaft in diesem Bereich geringfügig auf, jedoch ausreichend um ein Gewindespiel zu beseitigen. Dabei dreht sich der Andrückbolzen 15 relativ zu dem Klemmkörper 14. Nur wenn der Klemmkörper 14 einen Teil des Andrückbolzens 15 bildet, dreht dieser sich relativ zu der Innenwand des konischen Bohrungsteiles 12.

In dem in Fig. 3 dargestellten Ausführungsbeispiel ist die Wand 21 zwischen der Innenbohrung 13 und dem äusseren Umfang des Befestigungsschaftes 7 verhältnismässig dick, so dass der Klemmkörper 14 in Zusammenwirken mit der Konusfläche des Bohrungsteiles 12 eine entsprechend grosse radial nach aussen gerichtete Kraft entwickeln müsste, um die das Gewindespiel beseitigende geringfügige Aufweitung zu erreichen. Um diese Kraft, bzw. die Kraft mit der der Andrückbolzen 15 auf dem Klemmkörper 14 drücken muss, zu verringern, ist die genannte Wand 21 in dem aufzuweitende Bereich mit einem in Schaftlängsrichtung verlaufenden Schlitz 22 versehen. Statt nur eines Schlitzes können auch mehrere Schlitze in Umfangsrichtung des Schaftes verteilt vorgesehen sein. Der Schlitz 22 ist seitlich eingefräst und endet beidseitig in Abstand von den Enden des Befestigungsschaftes 7. Seine Breite ist durch die zweckmässige Breite des Werkzeuges für seine Herstellung bestimmt. Da die Aufgabe des Schlitzes lediglich darin besteht, die Wand 21 an einer Stelle zu unterbrechen, ist die Breite des Schlitzes 22 ohne Bedeutung.

Als Material für die Herstellung des Befestigungsschaftes 7 eignet sich besonders ein Metall mit keiner oder möglichst geringer Wärmeausdehnung.

**Patentansprüche**

1. Befestigungsschaft für den Lagerkörper eines Luftlagers mit einem Aussengewinde (10) für den Eingriff in ein Aufnahmeloch eines zu lagernden Trägerkörpers und einem für den Eingriff in ein Sackloch (5) des Lagerkörpers (2) bestimmten Abstützende (6), dadurch gekennzeichnet, dass sich durch mindestens einen Teil des Befestigungsschaftes (7) eine Bohrung (13) mit einem sich konisch verjüngenden Bohrungsteil (12) erstreckt, mindestens ein in Schaftlängsrichtung verlaufender Schlitz (22) sich vom Schaftumfang bis in die Schaftbohrung (13) hinein erstreckt, in ein Innengewinde (16) der Bohrung (13) ein Andrückbolzen (15) eingeschraubt ist und am Ende des Bolzens (15) ein am konischen Bohrungsteil (12) anliegender, kugelförmig abgerundeter Klemmteil (14) vorgesehen ist.

2. Befestigungsschaft nach Anspruch 1, dadurch gekennzeichnet, dass der Klemmteil (14) eine Stahlkugel ist.

3. Befestigungsschaft nach Anspruch 1 oder 2, dadurch gekennzeichnet, dass der Öffnungswinkel des konischen Bohrungsteiles (12) relativ zur Schaftachse mindestens angenähert 18° beträgt.

4. Befestigungsschaft nach einem der Ansprüche 1 bis 3, dadurch gekennzeichnet, dass die in axialer Richtung einander gegenüberliegenden Enden des Schlitzes (22) einen Abstand von den Enden des Befestigungsschaftes (7) aufweisen.

5. Befestigungsschaft nach Anspruch 4, dadurch gekennzeichnet, dass die Enden (23, 24) durch bogenförmige Einfräsungen gebildet sind, so dass sie im Schaftinneren einen geringeren Abstand voneinander aufweisen.

6. Befestigungsschaft nach einem der Ansprüche 1 bis 5, dadurch gekennzeichnet, dass das Abstützende des Befestigungsschaftes einen eine Kugelfläche aufweisenden Abstützkopf (8) aufweist, der für die Anlage an dem kegelförmigen Ende (9) der Sacklochbohrung (5) eines Lagerkörpers (2) vorgesehen ist.

**Claims**

1. Fixing shaft for the bearing box of an air bearing with an external thread (10) for engaging in a reception hole of a carrier member to be mounted and a support end (6) intended for engagement in a blind hole (5) of bearing box (2), characterized in that a bore (13) with a conically tapering bore part (12) extends through at least part of the fixing shaft (7), at least one slit (22) running in the longitudinal direction of the shaft extends from the circumference of the shaft into the shaft bore (13), a pressing bolt (15) is screwed into an internal thread (16) of bore (13) and at the end of bolt (15) is provided a spherically rounded jamming member (14) engaging on the conical bore part (12).

2. Fixing shaft according to claim 1, characterized in that the jamming member (14) is a steel ball.

3. Fixing shaft according to claims 1 or 2, characterized in that the cone angle of the conical bore part (12) relative to the shaft axis is at least approximately 18°.

4. Fixing shaft according to one of the claims 1 to 3, characterized in that the ends of slit (22) facing one another in the axial direction are spaced from the ends of fixing shaft (7).

5. Fixing shaft according to claim 4, characterized in that the ends (23, 24) are formed by arcuate milled recesses, so that they have a smaller spacing in the interior of the shaft.

6. Fixing shaft according to one of the claims 1 to 5, characterized in that the support end of the fixing shaft has a support head (8) having a spherical surface, which engages on the conical
end (9) of the blind hole (5) of a bearing box (2).


**Revendications**

1. Axe de fixation (7) pour le corps d'un palier à
coussinet d'air, comprenant un filetage extérieur
(10) destiné à être vissé dans un trou récepteur
taraudé prévu à cet effet dans le corps qu'il doit
supporter, et une extrémité d'appui (6) destinée à
être engagée dans un trou borgne (5) du corps de
palier (2), caractérisé en ce qu'il comprend un
alésage (13) qui s'étend axialement sur une partie
au moins de l'axe de fixation (7) et présente une
partie conique (12) de diamètre décroissant vers
l'intérieur, qu'il est prévu au moins une fente
latérale (22) disposée dans le sens longitudinal de
l'axe, qu'un boulon de pression (15) est vissé
dans un taraudage intérieur (16) de l'alésage (13),
et qu'il est prévu une pièce de coincement ou de
calage (14) arrondie, en forme de bille, disposée
à l'extrémité interne du boulon de pression (15) et
qui porte contre ladite partie conique (12) de
l'alésage (13).

2. Axe de fixation selon la Revendication 1,
caractérisé en ce que la pièce de coincement ou
de calage(14) est constituée par une bille en
acier.

3. Axe de fixation selon l'une ou l'autre des
Revendications 1 ou 2, caractérisé en ce que
l'angle d'ouverture de la partie conique de
l'alésage (13) est d'au moins environ 18° par
rapport à l'axe central de l'axe de fixation.

4. Axe de fixation selon l'une quelconque des
Revendications 1 à 3, caractérisé en ce que les
extrémités opposées, dans le sens axial, de la
fente (22) sont situées à une certaine distance
des extrémités de l'axe de fixation (7).

5. Axe de fixation selon la Revendication 4,
caractérisé en ce que les extrémités (23, 24) de la
fente sont usinées par fraisage en arc de cercle,
afin qu'elles se trouvent plus proches l'une de
l'autre à l'intérieur de l'axe.

6. Axe de fixation selon l'une quelconque des
Revendications 1 à 5, caractérisé en ce que
l'extrémité d'appui de l'axe de fixation comporte
une tête (8) à surface sphérique, prévue pour
prendre appui contre l'extrémité conique (9) de
l'alésage borgne (5) d'un corps de palier (2).

## FIG. 3

20
11
16
15
23
18
17
21
22
13
19
14
12
24
10
7
6
8

## FIG. 1

5
1
4  3  9  2

## FIG.2

11
10
7
2